# EUROPEAN PATENT SPECIFICATION

(11) **EP 2 712 421 B1**
(45) Date of publication and mention of the grant of the patent: **01.07.2015**
(21) Application number: 12716703.9
(22) Date of filing: 24.02.2012
(51) Int. Cl.: G01D 5/14

(54) **MAGNETIC SENSOR FOR DISPLACEMENT MEASUREMENTS**
MAGNETSENSOR FÜR VERSCHIEBUNGSMESSUNGEN
CAPTEUR MAGNÉTIQUE PERMETTANT DES MESURES DE DÉPLACEMENT

(30) Priority: 21.03.2011 PL 39428211
(43) Date of publication of application: 02.04.2014
(73) Proprietor: Mokrzecki, Arkadiusz Bernard, 11-030 Purda (PL); Nef, Czes Aw, 10-123 Olsztyn (PL)
(72) Inventor: Mokrzecki, Arkadiusz Bernard, 11-030 Purda (PL); Nef, Czes Aw, 10-123 Olsztyn (PL)
(74) Representative: Dziubinska, Joanna
(86) International application number: PCT/PL2012/000009
(87) International publication number: WO 2012/128652

(56) References cited:
- DD-A1- 229 224
- US-A1- 2007 120 556

## Description

The subject of the invention is magnetic sensor for displacement measurements, esp. in the field of metrology of non-electric signals. Measuring such physical quantities as force, pressure, mass , acceleration, strain, vibration, etc. is particularly promising.

The description from the Polish patent application no. P-383440 presents electronic liquid level transducer which can be applied to measure liquid levels or pressure of vapours and gases in industrial technological devices, heating systems or sewage treatment plants, particularly to regulate pressure in automated control environments.

The essence of the invention is magnetic sensor for displacement measurements, which consists of two rings magnets, placed in parallel arrangement with like poles facing each other, wherein rings magnets are permanently set inside the body made of a material characterized by a small thermal expansion coefficient within the range below 6 x 10⁻⁶ (m/mK), wherein in the internal space between the rings magnets there is a linear Hall sensor, or other sensor for magnetic flux strength measurement, is placed. Rings magnets are neodymic, and are placed within the distance between them equal to the radius of each of the magnet. The body is made from a ceramic material.

The invention proposed solution is the association of magnetic flux generated by a permanent magnet placed inside a silicone membrane, and a linear Hall sensor, which is connected to the circuit that converts the membrane strain signal to output voltage. The silicone membrane is shaped like a flat disc with a cut cone and a cylindrical part where a cylindrical permanent magnet is placed. The membrane is set inside a body containing the linear Hall sensor connected to an electronic circuit which converts the voltage signal into current signal 4-20mA.

In the invention, the magnetic sensor for displacement measurements consists of two ring magnets, advantageously neodymic), in parallel arrangement with like poles facing each other or two induction coils connected in opposite phase relation, advantageously within the distance equal to radius (R) of each magnet or coil. Ring magnets or induction coils are permanently set inside the body made of a material characterized by small thermal expansion coefficient within the range below 6 x 10⁻⁶ (m/mK), advantageously a ceramic one. In the internal space between the ring magnets or induction coils, the linear Hall sensor (or other sensor for magnetic flux strength measurement) is placed.

The application of the body made of the material with very low thermal expansion, tightly encasing both magnet rings (or induction coils), allows keeping constant distance between the magnetic rings (or induction coils) and identical temperature of both magnets or coils. Thus, the constant value of the differential magnetic flux is ensured. Taking into account substantial temperature influence on the density of the magnetic flux of an individual magnet or coil, it is of utmost importance for keeping constant value of the differential magnetic flux versus changes of ambient temperatures. Our sensor for displacement measurements does not require additional measures for temperature compensation.

Additionally, the invented magnetic sensor for displacement measurements has a simple construction and low production cost. It allows obtaining very precise measurement results at the level below 0.001 mm. Our sensor can find multiple applications in the field of metrology of physical quantity signal with special indication towards possibilities for precise measurements of very small displacement.

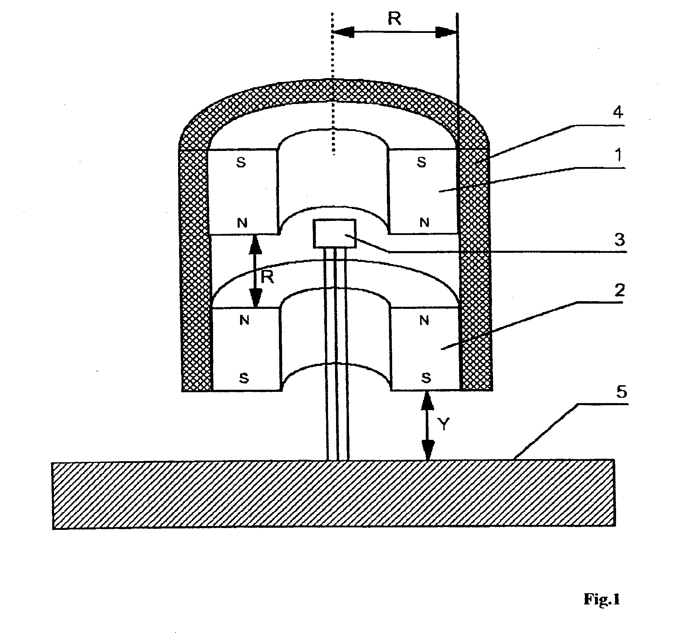

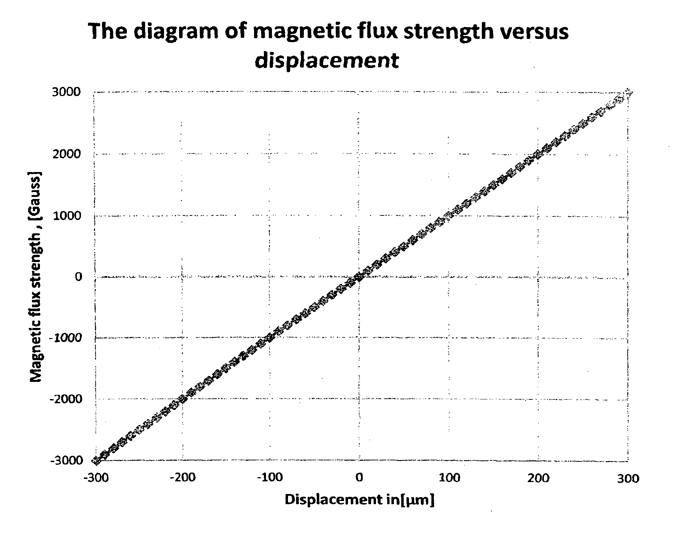

The invention will be described more closely in the sample sensor construction presented in the pictures, where Fig. 1 shows the magnetic sensor in longitudinal section, and Fig. 2 shows the graph of magnetic field strength versus displacement.

The magnetic sensor for displacement measurements consists of two neodymic ring magnets 1 and 2 placed in parallel arrangement with like poles N facing each other. The neodymic ring magnets 1 and 2 are located with a distance between them equalling radius R of each magnet 1 and 2 and they are permanently set in the ceramic body 4. The body is characterized by a very low thermal expansion coefficient, below 6 x 10⁻⁶ (m/mK). The body encasing the ring magnets 1 and 2 could also be made of other materials with low thermal expansion coefficient, namely graphite, invar, silicon, steatite, aluminium oxide, etc. In the inner space between neodymic ring magnets 1 and 2, the differential (close to constant) magnetic flux is created. The linear Hall sensor that converts the value of the differential magnetic field into voltage signal is located permanently in the magnetic flux area.

The sensor is positioned on a stable platform 5, to which the linear Hall sensor 3 is firmly attached, whereas the whole magnetic head, the neodymic ring magnets 1 and 2 held together in body 4, constitutes a movable part in relation to the stable platform 5. The converse arrangement is possible, where platform 5 is movable whereas the magnetic head with the neodymic ring magnets 1 and 2 held together in body 4 is the stable part. In both cases the displacement measurement is done in the Y axis.

The obtained linearity of the displacement signal versus changes in the strength of the magnetic field shown in the diagram results from constancy of the magnetic field obtained through the two fixed neodymic ring magnets 1 and 2 placed in the distance of the radius R of each of the rings.

## Claims

1. Magnetic sensor for displacement measurements comprising of ring magnets and a linear Hall sensor, **characterised in that** it consists of two ring magnets (1) and (2), placed in parallel arrangement with like poles facing each other, wherein ring magnets (1) and (2) are permanently set inside the body (4) made of a material **characterized by** a small thermal expansion coefficient within the range below 6 x 10⁻⁶ m/(m•K), wherein in the internal space between the ring magnets (1) or (2) there is a linear Hall sensor (3), or other sensor for magnetic flux strength measurement, is placed.

2. Magnetic sensor according to claim 1, **characterised in that** the ring magnets (1) and (2) are neodymic.

3. Magnetic sensor according to claims 1 and 2, **characterised in that** the ring magnets (1) and (2), are placed within the distance between them equal to the radius (R) of each of the magnet.

4. Magnetic sensor according to claims from 1 to 3, **characterised in that** the body (4) is made from a ceramic material.

## Patentansprüche

1. Magnetfühler zur Messung der Räume, bestehend aus Ringmagneten und dem linearen Hall-Fühler, kennzeichnet sich dadurch, dass er aus zwei Ringmagneten (1) und (2) besteht, welche mit Polen zueinander parallel liegen, wo die Ringmagnete (1) und (2) dauerhaft im Körper (4) aus dem Stoff von einem sehr kleinen Temperaturausdehnungskoeffizient im Bereich von unter 6 x 10⁻⁶ (m/mK) eingebettet sind, wo im mittleren Raum zwischen den Ringmagneten (1) und (2) der lineare Hall-Fühler (3) oder ein anderer Fühler zur Messung der magnetischen Feldstärke angebracht werden.

2. Magnetfühler gemäß Anspruch 1 kennzeichnet sich dadurch, dass die Ringmagnete (1) und (2) aus Neodym sind.

3. Magnetfühler gemäß Ansprüche 1 und 2 kennzeichnet sich dadurch, dass die Ringmagnete (1) und (2) zueinander in der Entfernung liegen, welche dem Radius (R) jedes von den Magneten gleich ist.

4. Magnetfühler gemäß Ansprüche 1 bis 3 kennzeichnet sich dadurch, dass der Körper (4) aus Keramik hergestellt wird.

## Revendications

1. Le détecteur magnétique à mesurer les déplacements, qui contient les aimants annulaires et le détecteur linéaire de Hall, qui se caractérise de la composition de deux aimants annulaires (1) et (2), favorablement de néodyme, situés, un par rapport à l'autre, parallèlement par des pôles homologues, où de deux bobines d'induction connectées dans la phase contraire, favorablement dans une distance égale au rayon (R) de chaque des aimants ou bobines, tandis que les annulaires (1) et (2) ou les bobines d'induction, sont encastrés d'une manière durable dans le corps (4) exécuté en matériel ayant le très petit coefficient de dilatation de température dans le domaine au-dessous de 6 x 10⁻⁶ (m/mK), favorablement céramique, mais dans l'espace centrale entre les annulaires (1) et (2) ou les bobines d'induction, le détecteur linéaire de Hall (3) est placé ou un autre détecteur adapté à mesurer l'intensité de champ du pôle magnétique.
